**Europäisches Patentamt**

**European Patent Office**

**Office européen des brevets**

(11) Veröffentlichungsnummer: **0 017 046**

**A1**

(12) **EUROPÄISCHE PATENTANMELDUNG**

(21) Anmeldenummer: **80101320.2**

(22) Anmeldetag: **13.03.80**

(51) Int. Cl.³: **B 29 D 27/00**

(30) Priorität: **10.04.79 DE 2914381**

(43) Veröffentlichungstag der Anmeldung:
**15.10.80 Patentblatt 80/21**

(84) Benannte Vertragsstaaten:
**AT BE CH FR GB IT NL SE**

(71) Anmelder: **METZELER SCHAUM GMBH**
**Donaustrasse 51**
**D-8940 Memmingen(DE)**

(72) Erfinder: **Dombkowski, Otto**
**Hauptstrasse 57**
**D-8941 Westerheim(DE)**

(74) Vertreter: **Michelis, Theodor, Dipl.-Ing.**
**Westendstrasse 131**
**D-8000 München 2(DE)**

(54) **Formkörper aus geschäumtem Kunststoff.**

(57) Bei einem Formkörper aus Polyurethanschaum sind in dem geschäumten Kunststoff (1) luftgefüllte, weiche Füllkörper (2) eingelagert, die aus einer zusammenhängenden Matte von Luftpolsterkörpern bestehen können.
  Diese Formkörper dienen als Auskleidungen und/oder Polsterungen.

./...

FIG. 1

FIG. 2

Formkörper aus geschäumtem Kunststoff

Die vorliegende Erfindung bezieht sich auf einen Formkörper aus geschäumtem Kunststoff, vorzugsweise Polyurethanschaum. Dabei sind die gemäß der im folgenden erläuterten Erfindung aufzubauenden Formkörper im besonderen zur Verwendung als Bodenmatten, Tür- und Seitenverkleidungen, Schallschürzen, Motorkapselungen, Innenauskleidungen von Traktoren, Lastkraftwagen, Schwer- und Baumaschinen, aber auch für Matratzen und Polsterauflagen bestimmt.

Es ist bekannt, Formteile aus Polyurethanschaum durch Hinterschäumen mit Folien aus verschiedensten Stoffen, Papier, Pappe, Blech oder ähnliche Materialien zu verbinden, um den so hergestellten Formkörper für spezielle Anwendungen geeignet zu machen.

Weiter ist es bekannt, um die Elastizität, den Luftaustausch oder auch die äußere Form zu beeinflussen, in den entsprechenden Polyurethanschaum-Formkörper unterschiedlichste Materialien einzuschäumen. Zu diesem Zweck werden vielfach im Vergleich zu Polyurethanschaum weichere oder auch härtere Schaumstoffe, aber auch Holzversteifungen, Drahtgeflechte, Metallkonstruktionen, z.B. auch Hohlrohre, Hartpappen, Gummifäden, Kokoshaar, Jute usw. eingesetzt.

Aufgabe der Erfindung ist es, einen auf die vorstehende Art durch Hinterschäumung oder Einschäumen aufzubauenden Formkörper aus geschäumtem Kunststoff, vorzugsweise Polyurethanschaum so aufzubauen, daß ohne nennenswerten Härteverlust oder auf Kosten von Hohlräumen im Formkörper selbst ein weiter Bereich zwischen weichen und harten Elastizitätsgraden möglich ist.

Diese Aufgabe wird durch einen Formkörper aus geschäumtem Kunststoff mit den Merkmalen des Patentanspruches 1 gelöst.

Vorteilhafte Ausführungsformen und Weiterbildungen ergeben sich bei Anwendung der Merkmale der Unteransprüche.

Bei dem Formkörper aus geschäumtem Kunststoff nach der Erfindung werden also luftgefüllte Füllkörper, und zwar, vorzugsweise schon aus Herstellungsgründen, Luftpolsterfolien, in Polyurethanschaum umschäumt bzw. hinterschäumt.

Gerade durch die Verwendung einer Luftpolsterfolie, also der Verwendung von zwei Lufteinschlüsse in regelmäßiger oder unregelmäßiger Form aufweisenden Kunststoffolien, welche wabenförmig zur Bildung einer Vielzahl von luftgefüllten Hohlkörper verschweißt sind, ergibt sich ein einfaches Herstellungsverfahren, wobei bei Verwendung einer derartigen Folie die Kombination mit Polyurethanschaum besonders einfach möglich ist. Das Gewicht der einzelnen Formkörper kann hierbei nennenswert reduziert werden, ohne daß - im Gegensatz zu Polyurethanschaum-Formteilen mit Hohlräumen - ein nennenswerter Härteverlust in Kauf genommen werden müßte.

Zur Herstellung spezieller Formkörper, insbesondere auch im Schallschutzbereich bzw. zur Schwingungsdämpfung können, ohne daß der Rahmen der Erfindung verlassen wird, die gemäß der vorliegenden Erfindung erzeugten Formkörper bei ihrer Herstellung gleichzeitig auch noch mit anderen Materialien verbunden werden.

Der Aufbau eines Formteils nach der Erfindung wird zusammengefaßt im folgenden in Verbindung mit den anliegenden Zeichnungen bei Verwendung einer Luftpolsterfolie erläutert. Es sei aber schon an dieser Stelle darauf hingewiesen, daß für die Zwecke der Erfindung auch andere luftgefüllte, weiche Füllkörper, also beliebige

-4-

mit einer weichen Folie, allseits geschlossene Luftkörper, z.B. in Kugel-, Würfel-, Zylinder- oder ähnlichen Formen verwendet werden können.

In den Zeichnungen zeigen:

Fig. 1    einen Ausschnitt einer Ansicht der Unterseite eines plattenförmigen Formkörpers, welcher durch Hinterschäumung gewonnen ist,

Fig. 2    eine Schnittansicht zur Ausführungsform nach Fig. 1,

Fig. 3    eine teilweise Draufsicht auf einendurch Umschäumung gewonnenen Formkörper und

Fig. 4    eine entsprechende Schnittansicht.

In den Figuren ist mit 1 jeweils der Polyurethanschaumkörper, aus welchemdie einzelnen Formkörper aufgebaut sein sollen, bezeichnet, während mit 2 die gemäß der Erfindung auf- bzw einzubringenden luftgefüllten, weichen Füllkörper bezeichnet sind. Diese Füllkörper sind als zusammenhängende Matte in Form einer sogenannten Luftpolsterfolie ausgebildet. Der Aufbau der Füllkörper erfolgt durch zwei weiche, luftundurchlässige Kunststofffolien 3 und 4, welche wabenförmig derart in den Bereichen 5 verschweißt sind, daß scheibenförmige, luftgefüllte Hohlräume bestehen bleiben.

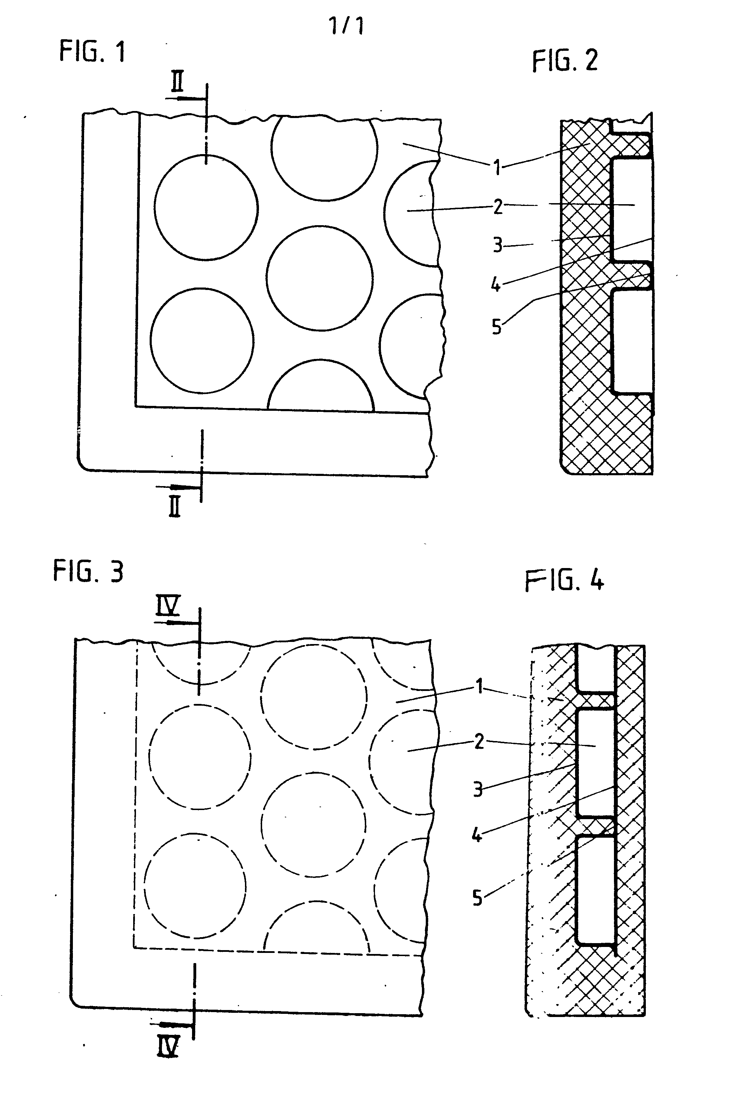

Bei der Ausführungsform nach den Fig. 1 und 2 ist die auf diese Weise erstellte Luftpolsterfolie einseitig durch Hinterschäumung mit dem Polyurethanschaumkörper verbunden, während bei der Ausführungsform nach den Fig. 3 und 4 die Luftpolsterfolie eingeschäumt ist.

Es sei darauf hingewiesen, daß die Formkörper nach der

-5-

Erfindung bei unterschiedlichen Polyurethanschaumsystemen und unter Verwendung verschieden harten Polyurethanschaums realisiert werden kann. Auch die Ausbildung der luftgefüllten Füllkörper, also der Aufbau der Luftpolsterfolien, kann sowohl der Form nach als auch hinsichtlich der Verwendung der die Lufträume umschließenden Kunststoffolien variiert werden.

In jedem Fall werden das Gewicht der geschäumten Formkörper ebenso wie die Herstellkosten - da der Preis für Polyurethan erheblich höher liegt als der einer Luftpolsterfolie - reduziert. Auch ist es möglich, auf diese Weise auf einfache Weise eine Anpassung der Härte der einzelnen Formkörper zu erreichen.

Schutzansprüche

1. Formkörper aus geschäumtem Kunststoff, vorzugsweise Polyurethanschaum, inbesondere zum Aufbau von Auflagen, Auskleidungen oder dergleichen, dadurch gekennzeichnet, daß in dem geschäumten Kunststoff (1) luftgefüllte, weiche Füllkörper (2) eingelagert sind.

2. Formkörper nach Anspruch 1, dadurch gekennzeichnet, daß die Füllkörper durch Hinterschäumung eingelagert sind.

3. Formkörper nach Anspruch 1, dadurch gekennzeichnet, daß die Füllkörper durch Umschäumung eingelagert sind.

4. Formkörper nach Anspruch 1 bis 3, dadurch gekennzeichnet, daß die Gesamtheit der Luftpolsterkörper als zusammenhängende Matte gebildet sind.

5. Formkörper nach Anspruch 3, gekennzeichnet durch die Verwendung einer aus zwei weichen Kunststofffolien (3, 4) wabenförmig verschweißten Luftpolsterfolie als Einlagematte.

MS 128 E 79

FIG. 1

FIG. 2

II

II

1
2
3
4
5

FIG. 3

FIG. 4

IV

IV

1
2
3
4
5

Europäisches
Patentamt

**EUROPÄISCHER RECHERCHENBERICHT**

Nummer der Anmeldung

EP 80 10 1320.2

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| | DE - A - 1 919 766 (NIRONA WERKE) <br> * Seite 3, Zeilen 1 bis 28; Seite 7, <br> Zeilen 1 bis 12; Fig. 1, 2 * <br> -- | 1-3 | B 29 D 27/00 |
| | GB - A - 1 260 727 (ELASTOMER AG) <br> * Seite 1, Zeilen 37 bis 52 und 68 <br> bis 71; Fig. 1 * <br> -- | 1-3 | |
| A | DE - A - 2 403 918 (S. KAWAKAMI) <br> * Seite 1, Zeilen 3 bis 18; Fig. <br> 5, 6 * <br> -- | | RECHERCHIERTE SACHGEBIETE (Int. Cl.) <br><br> B 29 C 17/03 <br> B 29 D 27/00 <br> B 68 G 11/04 <br> E 04 C 2/00 |
| A | DE - U - 1 917 053 (H. JACKSTÄDT) <br> * Seite 1, Zeilen 3 bis 10; Fig. 1 * <br> ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

X Der vorliegende Recherchenbericht wurde für alle Patentansprüche erstellt.

| Recherchenort | Abschlußdatum der Recherche | Prüfer |
|---|---|---|
| Berlin | 08-07-1980 | BRUCK |

EPA form 1503.1 06.78